(19) Europäisches Patentamt
European Patent Office
Office européen des brevets

(11) **EP 2 386 801 A1**

(12) **EUROPÄISCHE PATENTANMELDUNG**

(43) Veröffentlichungstag:
**16.11.2011 Patentblatt 2011/46**

(51) Int Cl.:
**F24D 11/02** (2006.01)      **F24D 19/10** (2006.01)

(21) Anmeldenummer: **10004932.9**

(22) Anmeldetag: **10.05.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**
Benannte Erstreckungsstaaten:
**BA ME RS**

(71) Anmelder: **Rehau AG + Co
95111 Rehau (DE)**

(72) Erfinder:
• **Kelz, Alexander
91080 Spardorf (DE)**
• **Pommer, Willi
90427 Nürnberg (DE)**

(54) **Verfahren zum Aktivieren eines Zusatz-Wärmeerzeugers einer Heizungsanlage eines Gebäudes**

(57) Die Erfindung betrifft ein Verfahren zum Aktivieren eines oder mehreren Zusatz-Wärmeerzeuger einer Heizungsanlage eines Gebäudes während des Betriebs der Heizungsanlage, wobei die Heizungsanlage einen Haupt-Wärmeerzeuger mit nicht einstellbarer Leistungsabgabe und wenigstens einen Speicher mit einem Speichermedium zur Speicherung von Wärmeenergie aufweist, wobei zur Speicherung von Wärmeenergie in dem Speichermedium von dem Haupt-Wärmeerzeuger erzeugte Wärmeenergie auf das Speichermedium übertragbar ist, wobei das Verfahren die Stufen (A) bis (L) umfasst.

Figur 1

EP 2 386 801 A1

**Beschreibung**

Die vorliegende Erfindung betrifft ein Verfahren zum Aktivieren eines Zusatz-Wärmeerzeugers einer Heizungsanlage eines Gebäudes während des Betriebs der Heizungsanlage, wobei die Heizungsanlage einen Haupt-Wärmeerzeuger mit nicht einstellbarer Leistungsabgabe, einen oder mehrere Zusatz-Wärmeerzeuger und wenigstens einen Speicher mit einem Speichermedium zur Speicherung von Wärmeenergie aufweist, wobei zur Speicherung von Wärmeenergie in dem Speichermedium von dem Haupt-Wärmeerzeuger erzeugte Wärmeenergie auf das Speichermedium übertragbar ist.

Beim Betrieb von mit wenigstens einem Speicher versehenen Heizungsanlagen, die einen Wärmeerzeuger mit konstanter Leistungsabgabe, wie z.B. eine Wärmepumpe, aufweisen, wobei es sich bei dem Speicher um einen Wasserspeicher und/oder um die beheizten Bauteile, wie bspw. den Estrich, im Falle einer Fußbodenheizung handeln kann, wird grundsätzlich zwischen monovalentem und bivalentem Betrieb unterschieden. Hierbei wird mit monovalentem Betrieb ein Betrieb bezeichnet, bei dem der gesamte Heizenergiebedarf des Gebäudes alleine durch den jeweiligen Haupt-Wärmeerzeuger gedeckt wird. Neben dem monovalenten Betrieb werden Heizungsanlagen auch im sogenannten Bivalenzbetrieb betrieben. Beim Bivalenzbetrieb bzw. beim bivalenten Betrieb wird der Heizenergiebedarf durch einen Haupt-Wärmerzeuger, wie z.B. eine Wärmepumpe, und einen Zusatz-Wärmeerzeuger gedeckt. Eine Zuschaltung des Zusatz-Wärmeerzeugers erfolgt dann, wenn die Heizleistung beim Betrieb mit dem Haupt-Wärmeerzeuger alleine nicht ausreicht, um den Heizenergiebedarf vollständig zu decken, wobei hierbei zwischen parallelem und alternativem Bivalenzbetrieb unterschieden wird. Beim sogenannten parallelen Bivalenzbetrieb werden der Haupt-Wärmeerzeuger und der oder die Zusatz-Wärmeerzeuger gleichzeitig betrieben. Beim sogenannten alternativen Bivalenzbetrieb wird bei Verwendung des bzw. der Zusatz-Wärmeerzeuger der Hauptwärmeerzeuger nicht gleichzeitig weiter betrieben. Weiterhin spricht man beim Bivalenzbetrieb von monoenergetischem Betrieb, wenn der bzw. die Zusatz-Wärmeerzeuger mit der gleichen Energieform wie der Hauptwärmeerzeuger betrieben wird/werden. Bei einer elektrisch betriebenen Wärmepumpe ist das z.B. in Form einer elektrischen Zusatzheizung gegeben.

Allgemein wird bei bekannten Heizungsanlagen, welche unter bestimmten Bedingungen einen oder mehrere Zusatz-Wärmeerzeuger zur Erzeugung bzw. Bereitstellung zusätzlicher Wärmeenergie aktivieren, ein sogenannter Bivalenzpunkt in der Regel in Form einer meist fest vorgegebenen Außentemperatur, wie. z.B. -5 °C, definiert, wobei für Außentemperaturen größer oder gleich diesem Bivalenzpunkt vermutet wird, dass der benötigte Heizwärmebedarf bzw. Wärmeenergiebedarf des Gebäudes alleine von dem Haupt-Wärmeerzeuger hinreichend gedeckt wird. Bei unter diesen Bivalenzpunkt fallenden Außentemperaturen wird angenommen, dass der Heizenergiebedarf bzw. Wärmeenergiebedarf des Gebäudes von dem Haupt-Wärmeerzeuger nicht mehr vollständig gedeckt werden kann und der bzw. die Zusatz-Wärmerzeuger aktiviert werden, um zusätzliche Wärmeenergie zur Deckung des Wärmeenergiebedarfs zu erzeugen bzw. bereitzustellen.

Die bei bekannten Heizungsanlagen verwendeten Zusatz-Wärmerzeuger, wie z.B. in Form einer elektrischen Zusatzheizung, weisen in der Regel eine wesentlich geringere Leistungszahl als der z.B. in Form einer Wärmepumpe ausgebildete Haupt-Wärmeerzeuger auf. Hierbei ist die Leistungszahl definiert als das Verhältnis von nutzbarer Energie zu eingesetzter Energie, so dass z.B. die Leistungszahl einer elektrischen Zusatzheizung kleiner oder gleich eins ist, während die Leistungszahl einer Wärmepumpe auch bei geringen Außentemperaturen größer 1 sein kann, wobei durchaus auch Werte größer 3 möglich sind. Infolge der stets geringeren Leistungszahl des bzw. der Zusatz-Wärmeerzeuger verringert jede auch nur kurze Laufzeit des bzw. der Zusatz-Wärmeerzeuger die Gesamteffizienz bzw. den gesamten Wirkungsgrad der Heizungsanlage.

Durch die Definition eines festen Bivalenzpunkts wird bei bekannten Verfahren zum Aktivieren eines Zusatz-Wärmeerzeugers einer Heizungsanlage jedes Mal, wenn die Außentemperatur unter diesen Wert fällt, z.B. die elektrische Zusatzheizung aktiviert, einhergehend mit einer wesentlichen Verschlechterung der Heizanlageneffizienz bzw. des Wirkungsgrads der Heizungsanlage.

Es ist insbesondere aus Messungen bekannt, dass Außentemperaturen oft nur für einen kurzen Zeitraum von wenigen Stunden unterhalb des Bivalenzpunkts liegen. Aufgrund der Wärmekapazität des von der jeweiligen Heizungsanlage erwärmten Gebäudes ist bei einer solchen kurzfristigen Unterschreitung des Bivalenzpunkts eine Unterversorgung des Gebäudes in der Regel nicht vorhanden, da erst bei dauerhaften niedrigen Außentemperaturen die Transmissionsverluste so groß werden, dass sie durch die Wärmepumpe alleine nicht mehr gedeckt werden können.

Oftmals wird der Bivalenzpunkt auch durch den Installateur zu hoch eingestellt, um Kundenreklamationen, die auf eine nicht hinreichende Erwärmung verweisen ("es wird nicht warm") zu verhindern.

<u>Zugrundeliegende Aufgabe</u>

Der vorliegenden Erfindung liegt die Aufgabe zugrunde, für eine Heizungsanlage eines Gebäudes mit wenigstens einem Speicher Haupt-Wärmeerzeuger mit nicht einstellbarer Leistungsabgabe und mindestens einem Zusatz-Wärmeerzeuger ein Verfahren zum Aktivieren eines Zusatz-Wärmerzeugers der Heizungsanlage während des Betriebs derselben anzugeben, mit welchem die durch Aktivieren des Zusatz-Wärmerzeugers verbundene Verschlechterung des Heizungsanlagen-Wirkungsgrads im Unterschied zu bekannten Lösungen deutlich reduziert werden kann.

Erfindungsemäße Lösung

Diese Aufgabe wird erfindungsgemäß mit einem Verfahren zum Aktivieren eines Zusatz-Wärmeerzeugers einer Heizungsanlage eines Gebäudes während des Betriebs der Heizungsanlage mit den Merkmalen des Anspruchs 1 gelöst.

Die Heizungsanlage weist vorzugsweise einen Haupt-Wärmeerzeuger mit nicht einstellbarer Leistungsabgabe in Form einer Wärmepumpe auf. Der Zusatz-Wärmeerzeuger kann z.B. in Form eines elektrischen Zusatzheizgeräts ausgebildet sein. Der Zusatz-Wärmeerzeuger kann beispielsweise zur Erhöhung der Temperatur des Speichermediums oder zur Erhöhung der Vorlauftemperatur der Heizungsanlage verwendet werden.

Das erfindungsgemäße Verfahren umfasst die Stufen A bis L.

Die Stufe A umfasst das Vorgeben einer Maximalunterschreitung $T_{max1}$ einer Solltemperatur $T_A$ des Speichermediums, das Vorgeben oder Berechnen einer Sperrzeit $t_z$, das Vorgeben einer Wartezeit $t_w$, das Vorgeben eines Bivalenztemperatur-Grenzwerts $T_{BV}$, und das Vorgeben einer Temperaturdifferenz $\Delta T_{pufferspeicher}$.

Die Maximalunterschreitung $T_{max1}$, ist hierbei erfindungsgemäß als positive Größe definiert und liegt vorzugsweise innerhalb eines Bereichs von +1 °C bis +6 °C, wobei insbesondere etwa 2°C verwendet werden.

Die berechneten Solltemperaturen $T_A$ bzw. $T_B$ können typischerweise innerhalb eines Bereichs von 20 °C bis 70 °C, 25 °C bis 45 °C liegen.

In Stufe B erfolgt das Berechnen der Solltemperatur $T_A$ und der Solltemperatur $T_B$ des Speichers, wobei nach dem Berechnen die Solltemperatur $T_B$ der Solltemperatur $T_A$ gleichgesetzt wird, wenn $T_B$ größer oder gleich $T_A$ ist, oder unverändert beibehalten wird, wenn $T_B$ kleiner als $T_A$ ist. Durch das Gleichsetzen, wenn $T_B$ größer oder gleich $T_A$, ist wird gewährleistet, dass die Solltemperatur $T_B$ stets eine geringere oder gleiche Anforderung an den Speicher bzw. die Speicherbeladung stellt.

Anschließend erfolgt in Stufe D, wenn $T_{sp1}$ kleiner als $T_A$ - $T_{max1}$ ist, das Beginnen der Wartezeit $t_w$, Veranlassen oder Weiterführen des Übertragens der durch den Haupt-Wärmerzeuger erzeugten Wärmenergie in das Speichermedium und Fortführung des Verfahrens bei Stufe (E), oder, wenn $T_{sp1}$ größer oder gleich $T_A$ + $T_{max1}$ ist, Beenden des Übertragens von Wärmeenergie in das Speichermedium und Rückkehr zu Stufe (B), sonst bei nicht laufender Übertragung Rückkehr zu Stufe (B), sonst bei laufender Übertragung Fortführen des Verfahrens mit Stufe (E).

Danach erfolgt in Stufe E ein Messen der aktuellen Temperatur des Speichermediums $T_{sp2}$ und Abspeichern des Temperaturwertes als $T_{sp2}$ sowie das Beginnen der Sperrzeit $t_z$ und Fortführen des Verfahrens bei Stufe (F), wenn die Wartezeit $t_w$ abgelaufen ist, oder Rückkehr zu Stufe (C), wenn die Wartezeit $t_w$ noch nicht abgelaufen ist.

Das Einhalten der Wartezeit $t_w$ dient dem Erzielen eines stabilen Zustands. Die Wartezeit $t_w$ liegt hierbei vorzugsweise innerhalb eines Bereichs von 1 bis 10 Minuten, insbesondere bei etwa 5 Minuten.

Nach Ablauf der Wartezeit $t_w$ erfolgt in Stufe F das Messen der aktuellen Temperatur des Speichermediums $T_{aktuell}$, wenn $T_{aktuell}$ größer oder gleich $T_A$ + $T_{max1}$ ist, Beenden des Übertragens von Wärmeenergie in das Speichermedium und Rückkehr zu Stufe (B), oder, wenn $T_{aktuell}$ kleiner ist als $T_A$ + $T_{max1}$, Fortführen des Verfahrens bei Stufe (G).

In Stufe G erfolgt anschließend das Fortführen des Verfahrens bei Stufe (H), wenn die Sperrzeit $t_z$ abgelaufen ist, oder Rückkehr zu Stufe (F), wenn die Sperrzeit $t_z$ noch nicht abgelaufen ist. Die Sperrzeit $t_z$ kann hierbei vorzugsweise innerhalb eines Bereichs von 0 Minuten bis 180 Minuten liegen, insbesondere etwa 30 Minuten betragen.

In Stufe H erfolgt das Messen der aktuellen Temperatur $T_{sp3}$ des Speichermediums und der aktuellen Außentemperatur $T_{aussen}$, vorzugsweise zu einem Zeitpunkt, der am Ablaufzeitpunkt einer Zeitdauer der Länge $t_z$ nach dem Messzeitpunkt der in Stufe E erfolgten Messung der Temperatur $T_{sp2}$ liegt. Nach dem Berechnen der Größe $\Delta T$ gemäß $\Delta T = T_{sp3}$ - $T_{sp2}$ erfolgt in Stufe Iein Fortführen des Verfahrens bei Stufe J, wenn $\Delta T$ kleiner als $\Delta T_{pufferspeicher}$ und die aktuelle Außentemperatur $T_{aussen}$ kleiner als $T_{BV}$ ist, oder es erfolgt eine Rückkehr zu Stufe E, wenn $\Delta T$ größer oder gleich $\Delta T_{Pufferspeicher}$ oder $T_{aussen}$ größer oder gleich $T_{BV}$ ist

In Stufe J erfolgt ein Fortführen des Verfahrens bei Stufe K, wenn die in Stufe H gemessene Temperatur $T_{sp3}$ kleiner als $T_B$ ist, oder es erfolgt eine Rückkehr zu Stufe E, wenn die in Stufe H gemessene Temperatur $T_{sp3}$ größer oder gleich $T_B$ ist.

In Stufe K erfolgt das Ermitteln des Wärmeenergiebedarfs des Gebäudes und ein Fortführen des Verfahrens bei Stufe L, wenn für die Erwärmung des Gebäudes ein zusätzlicher Wärmeenergiebedarf besteht, oder es erfolgt eine Rückkehr zu Stufe E, wenn der Wärmeenergiebedarf gedeckt ist.

In Stufe L erfolgt das Aktivieren des Zusatz-Wärmeerzeugers zum Erzeugen von zusätzlicher Wärmeenergie für die Erwärmung des Gebäudes.

Soweit nichts anderes angemerkt ist, wird das erfindungsgemäße Verfahren nach Beenden einer Stufe mit der sich daran unmittelbar anschließenden Stufe fortgesetzt.

Im Unterschied zu bekannten Lösungen, wo der Zusatz-Wärmeerzeuger immer dann aktiviert wird, wenn die Außentemperatur unter einen fest vorgegebenen Außentemperaturwert in Form des fest vorgegebenen Bivalenzpunkts fällt, erfolgt bei dem erfindungsgemäßen Verfahren in den Stufen 1, J, K eine mehrfache Abprüfung gestellter Bedingungen. Erst wenn alle in diesen Stufen geforderten Bedingungen erfüllt sind, erfolgt in Stufe L ein Aktivieren des Zusatz-Wärmeerzeugers.

So wird in Stufe I das Fortführen des Verfahrens bei Stufe J unter der Bedingung vorgenommen, dass die zuvor berechnete Temperaturdifferenz $\Delta T$ kleiner als $\Delta T_{Pufferspeicher}$ und $T_{aussen}$ kleiner als $T_{BV}$ ist. Im Unterschied zu bekannten Lösungen, wo üblicherweise schon ein Aktivieren des Zusatz-Wärmeerzeugers erfolgen würde, wenn $T_{aussen}$ kleiner als $T_{BV}$ wäre, ist gemäß Stufe I noch die Bedingung zu erfüllen, dass $\Delta T$ kleiner ist als $\Delta T_{pufferspeicher}$ wobei $\Delta T_{pufferspeicher}$ eine in Stufe A vorgegebene Temperaturdifferenz ist. Diese Temperaturdifferenz beträgt vorzugsweise 1 K bis 10 K, besonders bevorzugt 1,5 K bis 2,5 K und insbesondere etwa 2 K und bestimmt sich nach der Leistung der Wärmepumpe und der Wärmekapazität des Speichers. Wenn diese Bedingung erfüllt ist, wurde innerhalb der Sperrzeit $t_z$ eine durch die Größe $\Delta T_{pufferspeicher}$ vorgegebene Temperaturerhöhung des Speichermediums, wie z.B. Wasser, nicht erreicht. Dies deutet daraufhin, dass zumindest zeitweise der Wärmenergiebedarf von dem Haupt-Wärmeerzeuger alleine nicht hinreichend gedeckt war. In Stufe J wird noch geprüft, ob die in Stufe H gemessene Temperatur $T_{sp3}$ kleiner als $T_B$ ist, also ob die in Stufe B berechnete Solltemperatur $T_B$ erreicht wurde oder nicht. Wenn nicht, deutet auch dies daraufhin, dass zumindest zeitweise der Wärmenergiebedarf von dem Haupt-Wärmeerzeuger alleine nicht hinreichend gedeckt war.

In Stufe K wird noch die Bedingung abgeprüft, ob für die Erwärmung des Gebäudes ein aktueller Wärmeenergiebedarf besteht. Hierbei kann der Wärmeenergiebedarf z.B. durch Messen der aktuellen Raumtemperaturen aller Räume, die für eine Erwärmung durch die Heizungsanlage vorgesehen sind, und/oder durch Vergleich der gemessenen Raumtemperaturen mit den jeweiligen Raumtemperatur-Sollwerten ermittelt werden, derart, dass ein zusätzlicher Wärmeenergiebedarf besteht, wenn in wenigstens einem der Räume der gewünschte Raumtemperatur-Sollwert nicht erreicht wird. Alternativ kann der Wärmeenergiebedarf des Gebäudes ermittelt werden, indem geprüft wird, ob die für die Beheizung des Gebäudes verantwortlichen Heizkreise aktuell mit Energie versorgt werden.

Erst wenn ein derartiger aktueller Wärmeenergiebedarf besteht, erfolgt in Stufe L das Aktivieren des Zusatz-Wärmeerzeugers.

Die Stufe K kann hierbei dafür vorgesehen sein, zu berücksichtigen, dass es - obwohl die Solltemperaturen $T_A$ und $T_B$ zuvor nicht erreicht wurden - bedingt durch den Aufbau der Heizungsanlage und die hydraulischen Verhältnisse sein kann, dass in allen Räumen, die für eine Erwärmung durch die Heizungsanlage vorgesehen sind, die jeweiligen erwünschten Raumtemperatur-Sollwerte erreicht wurden, so dass kein zusätzlicher Wärmeenergiebedarf besteht.

Mittels des erfindungsgemäßen Verfahrens wird hinreichend abgeprüft, ob ein Aktivieren des oder

der Zusatz-Wärmeerzeugers, der z.B. in Form eines elektrischen Heizgeräts ausgebildet sein kann, tatsächlich erforderlich ist, was mit einer wesentlichen Einsparung an Betriebszeit des Zusatz-Wärmeerzeugers einhergeht, welche bei bekannten Lösungen infolge der vorgenommenen starren Aktivierung unterhalb des Bivalenzpunkts unnötig hoch ist.

Insgesamt kann mittels des erfindungsgemäßen Verfahrens die durch Aktivieren des Zusatz-Wärmerzeugers verbundene Verschlechterung des Heizungsanlagen-Wirkungsgrads im Unterschied zu bekannten Lösungen deutlich reduziert werden, was auch mit einer höheren Anlageneffizienz und einem geringeren Stromverbrauch einhergeht, wobei letzteres mit einer wesentlichen Reduzierung der Kosten für den Betrieb der Heizungsanlage verbunden ist.

Vorzugsweise handelt es sich bei dem Haupt-Wärmeerzeuger mit nicht einstellbarer Leistung um eine Wärmepumpe.

Bei einer bevorzugten Ausführungsform des erfindungsgemäßen Verfahrens wird in Stufe F das Verfahren bei Stufe L und nicht bei Stufe G fortgeführt, wenn nach Ablauf einer vorgegebenen Laufzeit des Verfahrens während dieser Laufzeit die in Stufe E gemessene Temperatur $T_{sp2}$ kein einziges Mal größer oder gleich $T_B$ war. Diese vorgegebene Laufzeit kann bevorzugt innerhalb eines Bereichs von 60 Minuten bis 240 Minuten liegen. Gemäß dieser bevorzugten Ausführungsform erfolgt eine Umgehung der in den Stufen I bis K vorgesehen Ausschlusskriterien, um dennoch den Zusatz-Wärmeerzeuger zu aktivieren, wenn die Solltemperatur $T_B$ nach längerer Dauer nicht erreicht wird.

Bei einer praktischen Ausführungsform erfolgt die Berechnung der Solltemperatur $T_A$ in Stufe B durch Anwendung einer Heizkurve unter Verwendung der Außentemperatur, vorzugsweise unter zusätzlicher Verwendung wenigstens eines Raumtemperatur-Sollwerts, der für die Regelung der Raumtemperatur wenigstens eines Raums des Gebäudes vorgegeben wird, vorzugsweise unter zusätzlicher Verwendung wenigstens eines gemessenen Raumtemperaturwerts in Bezug zu dem für diesen Raum geltenden Raumtemperatur-Sollwertes.

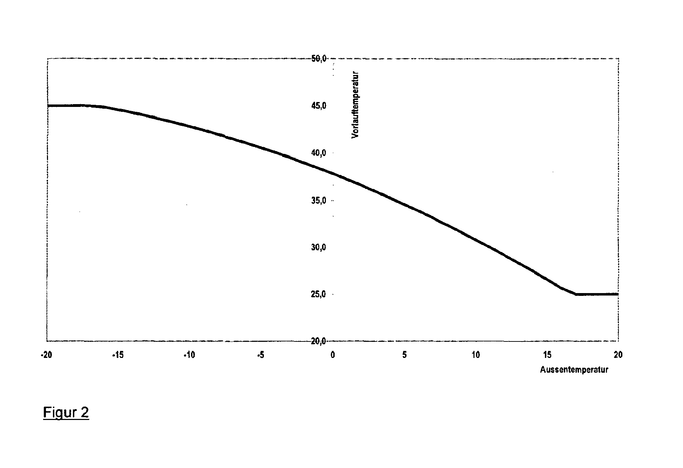

Ein Beispiel für eine derartige Heizkurve ist in Figur 2 gezeigt. In dem Diagramm ist die für eine bestimmte Außentemperatur erforderliche Vorlauftemperatur in °C gegen die Außentemperatur ebenfalls in °C aufgetragen. Derartige Heizkurven können in einem Regelungssystem des Haupt-Wärmeerzeugers hinterlegt sein oder im Verlauf des Betriebs des Haupt-Wärmeerzeugers ermittelt oder abgeändert werden und an das jeweilige Gebäude angepasst werden. Aus dem Graphen der Heizkurve lässt sich für die aktuell geltende gemittelte Außentemperatur die zu verwendende Vorlauftemperatur ermitteln. Die so ermittelte Vorlauftemperatur kann dann als Solltemperatur $T_A$ des Speichers angenommen werden. Beispielsweise resultiert aus einer Außentemperatur von + 10°C eine Solltemperatur $T_A$ des Speichers von 31°C. Auf diese Weise kann die Berechnung der Solltemperatur $T_A$ an den außentemperaturabhängigen Wärmeenergiebedarf des Gebäudes angepasst werden.

Bevorzugt wird jedoch auch zusätzlich zumindest ein Raumtemperatur-Sollwert und/oder wenigstens ein gemessener Raumtemperaturwert in Bezug zu dem für diesen Raum geltenden Raumtemperatur-Sollwert zur Berechnung von $T_A$ eingesetzt. Beispielsweise wird in einer reduzierten Betriebsart, insbesondere wenn die Bewohner des Gebäudes sich längere Zeit nicht im Gebäude aufhalten, eine reduzierte Solltemperatur $T_A$ ermittelt, wenn für den Raumtemperatur-Sollwert die reduzierten Werte gelten. Besonders bevorzugt wird zusätzlich wenigstens ein gemessener Raumtemperaturwert in Bezug zu dem für diesen Raum geltenden Raumtemperatur-Sollwert verwendet, um die Berechnung der Solltemperatur $T_A$ zu beeinflussen. Diese Beeinflussung kann derart erfolgen, dass $T_A$ reduziert wird, wenn der Raumtemperatur-Istwert über dem Raumtemperatur-Sollwert liegt, oder dass $T_A$ erhöht wird, wenn der Raumtemperatur-Istwert unter dem Raumtemperatur-Sollwert liegt. Dadurch kann die Berechnung der Solltemperatur an die derzeit herrschenden Bedingungen im Gebäudeinneren angepasst werden, wodurch Wärmeerträge in Zeiten hoher solarer Einstrahlung, die den Raumtemperatur-Istwert erhöhen, indirekt berücksichtigt werden können.

Unter einer geeigneten zeitlichen Filterung ist im Sinne der vorliegenden Erfindung die Bildung eines Mittelwerts über einen geeigneten Zeitraum zu verstehen. In Bezug auf die Au-βentemperatur ist ein geeigneter Zeitraum vorzugsweise 1 h bis 60 h, insbesondere 24 oder 48 Stunden. In Bezug auf die Raumtemperatur ist ein geeigneter Zeitraum vorzugsweise 1 Minute bis 60 Minuten, insbesondere 30 Minuten. Die Filterung der Außentemperatur dient zur Berücksichtigung der thermischen Trägheit des Gebäudes. Die Filterung der Raumtemperaturen dient zur Eliminierung von kurzzeitigen Störeinflüssen auf die Raumtemperatur, zum Beispiel Stoßlüften.

Bei einer weiteren praktischen Ausführungsform erfolgt die Berechnung der Solltemperatur $T_B$ in Stufe B durch Subtraktion eines festen Wert $\Delta T$ von der Solltemperatur $T_a$ gemäß der Gleichung

$$T_B = T_A - \Delta T$$

wobei $\Delta T$ ein konstanter Wert ist.

Bei einer weiteren praktischen Ausführungsform erfolgt die Berechnung der Solltemperatur $T_B$ in Stufe B derart, dass für die Berechnung der Solltemperatur $T_B$ in Stufe B gemäß der Gleichung

$$T_B = T_A - \Delta T$$

im ersten Durchlauf des Verfahrens von einer festen Abweichung $\Delta T$ von 1 bis 6 K, vorzugsweise 4 K, ausgegangen wird, und in den darauffolgenden Durchgängen die Berechnung der Solltemperatur $T_B$ in Stufe B gemäß der Gleichung

$$T_B = T_{B\_alt} + \Delta T_{Raum}$$

erfolgt, wobei $T_{B\_alt}$ der Wert für $T_B$ des vorherigen Durchgangs des Verfahrens ist und die durchschnittliche Abweichung $\Delta T_{Raum}$ der Raumtemperatur-Istwerte von den Raumtemperatur-Sollwerten in mindestens einem der Räume des Gebäudes während der zurückliegenden 1 bis 12 Stunden, vorzugsweise 6 Stunden, ermittelt wird.

Bei einer weiteren praktischen Ausführungsform erfolgt die Berechnung der Solltemperatur $T_B$ in Stufe B derart, dass für die Berechnung der Solltemperatur $T_B$ in Stufe (B) zusätzlich zur Bestimmung von $\Delta T_{Raum}$ die durchschnittlichen Abweichungen der Raumtemperatur-Istwerte von den Raumtemperatur-Sollwerten abhängig von der Art der Nutzung gewichtet werden. Eine Gewichtung kann derart erfolgen, dass die Räume in drei Kategorien, beispielsweise hohe, normale und niedrige Priorität eingeteilt werden. Dabei können für die Prioritätsklassen "hoch", "normal" und "niedrig" Wichtungsfaktoren von z.B. 1,5, 1,0 und 0,5 für die Abweichung der Raumtemperatur-Istwerte von den Raumtemperatur-Sollwerten verwendet werden. Vorzugsweise werden Räume, in denen sich Personen überwiegend aufhalten, oder die einem besonderen Komfortbedürfnis unterliegen, wie Wohnzimmer oder Badezimmer in die Prioritätsklasse "hoch" eingeordnet. Räume wie beispielsweise Schlafzimmer, Arbeitszimmer und Küchen werden vorzugsweise in die Prioritätsklasse "normal" eingeordnet. Vorzugsweise werden Räume, in denen sich Personen nur kurzzeitig aufhalten, oder die einem geringen Komfortbedürfnis unterliegen, wie Kellerräume, Abstellräume oder Flure in die Prioritätsklasse "niedrig" eingeordnet.

Darüber hinaus erfolgt die Berechnung der Solltemperatur $T_B$ in Stufe B bevorzugt derart, dass für die Berechnung der Solltemperatur $T_B$ in Stufe B zusätzlich die Differenz der Raumtemperatur-Istwerte zu den Raumtemperatur-Sollwerten der oder die Raumtemperatursollwerte der folgenden 1 bis 6 Stunden, vorzugsweise 2 Stunden, berücksichtigt werden. Dadurch soll vermieden werden, dass der Zusatz-Wärmeerzeuger verwendet wird, obwohl die in naher Zukunft liegenden Raumtemperatur-Sollwerte durch auf die momentanen Istwerte deutlich übertroffen werden. Im anderen Fall kann es bei steigenden Sollwerten sinnvoll sein, den Zusatz-Wärmeerzeuger zu aktivieren, um zukünftige Sollwertunterschreitungen zu vermeiden.

Darüber hinaus kann es für die Durchführung des erfindungsgemäßen Verfahrens günstig sein, wenn zusätzlich der Sollwert $T_A$ so angepasst wird, dass die Differenz zwischen $T_A$ und $T_B$ stets in einem Bereich zwischen einem Maximalwert $\Delta T_{max}$ und einem Minimalwert $\Delta T_{min}$ liegt.

In besonders bevorzugten Ausführungsformen des Erfindungsgemäßen Verfahrens betragen $\Delta T_{max}$ 1 bis 6 K, vorzugsweise 4 K, und $\Delta T_{min}$ 0 bis 4 K, vorzugsweise 1 K.

In einer praktischen Ausführungsform des Verfahrens wird die Sperrzeit $t_z$ im Schritt A durch einen anlagenabhängigen Einstellwert durch den Installateur fest vorgegeben, alternativ dazu wird die Sperrzeit $t_z$ berechnet, wobei für die Berechnung der Sperrzeit $t_z$ eine lineare Funktion in Abhängigkeit der zeitlich gemittelten Außentemperatur verwendet, wobei $t_z$ bei $T_{Bv}$ einen vorgegebenen Wert zwischen 5 und 120 Minuten, vorzugsweise 60 Minuten beträgt, mit sinkender Außentemperatur abnimmt und bei einer anlagenabhängigen Grenzaußentemperatur den Wert Null annimmt.

Anstelle der gemittelten Außentemperatur kann für die Berechnung der Solltemperatur $T_A$ bzw. der Solltemperatur $T_B$ als berechnete Größe insbesondere eine aus mehreren gemessenen Temperaturwerten und/oder mehreren Raumtemperatur-Sollwerten berechnete Größe verwendet werden.

Die berechnete Größe kann vorzugsweise ein aus gemessenen Außentemperaturwerten berechneter Außentemperatur-Gradient sein. Insbesondere kann die berechnete Größe auch eine Regelabweichung sein, die aus einem oder mehreren gemessenen Raumtemperaturen und dem für den betreffenden Raum vorgegebenen Raumtemperatur-Sollwert berechnet wird.

Besonders bevorzugt kann die berechnete Größe eine Interpolation bzw. ein Schätzwert einer zukünftig zu erwartenden Außentemperatur sein, wobei die Interpolation bzw. die Ermittlung des Schätzwerts auf Basis eines Vergleichs zwischen einem oder mehreren aktuell gemessenen Außentemperaturwerten und wenigstens einem Außentemperaturwert, der am Vortag gemessen wurde, erfolgt. Bevorzugt kann hierbei für die Interpolation bzw. zur Ermittlung des Schätzwerts der zeitliche Verlauf von gemessenen Außentemperaturen des Vortages verwendet werden. Es hat sich, insbesondere anhand von typischen Temperaturverläufen gezeigt, dass aus dem Vortagesverlauf auf ein ähnliches Verhalten geschlossen werden kann. Der Verlauf der Außentemperatur ist überwiegend von der Tageszeit und der Jahreszeit abhängig. Durch die Berücksichtigung des bzw. evtl. der letzten Tage lässt sich abschätzen, wie die Außentemperatur eines Tages verlaufen wird bzw. welche Außentemperaturwerte sich ergeben werden. Insbesondere lässt sich abschätzen, ob ein Bivalenzpunkt bzw. eine Bivalenztemperatur überschritten wird.

Mittels der oben dargelegten Berechnung können Solltemperaturen $T_A$ bzw. $T_B$ bereitgestellt werden, die eine wesentliche Verringerung der Laufzeit des Zusatz-Wärmeerzeugers ohne spürbaren Komfortverlust ermöglichen.

Die Erfindung betrifft ferner eine Heizungsanlage für ein Gebäude, wobei die Heizungsanlage dazu eingerichtet ist, ein Verfahren nach einem der Ansprüche 1 bis 13 auszuführen.

Kurzbeschreibung der Figuren

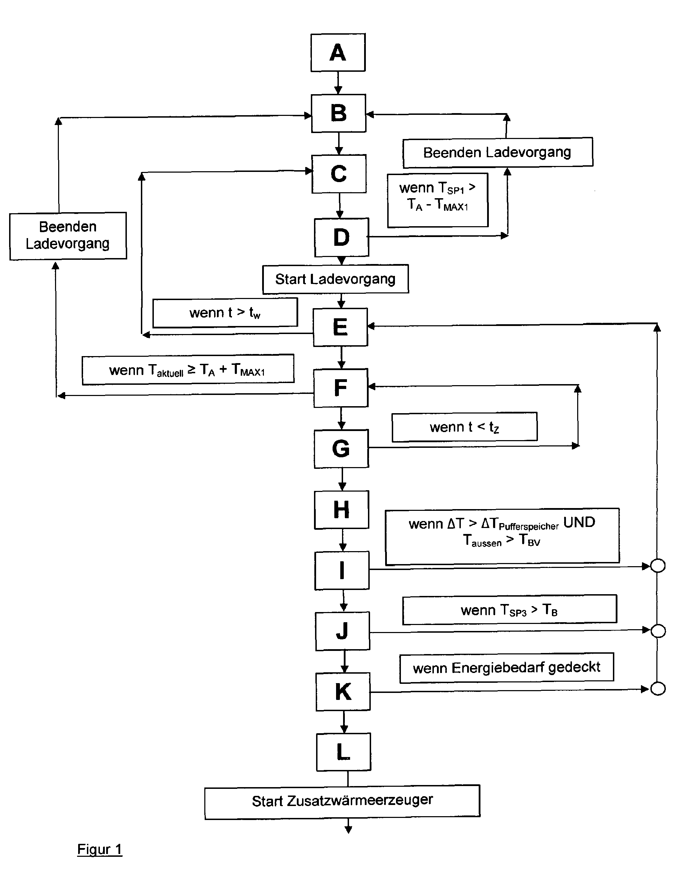

Figur 1 zeigt ein schematisches Ablaufdiagramm eines Ausführungsbeispiels des erfindungsgemäßen Verfahrens. Das mittels des Ablaufdiagramms veranschaulichte Verfahren umfasst die Stufen A bis L.

Figur 2 zeigt eine exemplarische Heizkurve, wie sie gemäß dem erfindungsgemäßen Verfahren zur Bestimmung der Solltemperatur $T_A$ zum Einsatz kommen kann.

**Patentansprüche**

1. Verfahren zum Aktivieren eines Zusatz-Wärmeerzeugers einer Heizungsanlage eines Gebäudes während des Betriebs der Heizungsanlage, wobei die Heizungsanlage einen Haupt-Wärmeerzeuger mit nicht einstellbarer Leistungsabgabe, einen Zusatz-Wärmeerzeuger und wenigstens einen Speicher mit einem Speichermedium zur Speicherung von Wärmeenergie aufweist, wobei zur Speicherung von Wärmeenergie in dem Speichermedium von dem Haupt-Wärmeerzeuger erzeugte Wärmeenergie auf das Speichermedium übertragbar ist, wobei das Verfahren die folgenden Stufen umfasst:

(A) Vorgeben einer Maximalunterschreitung $T_{max1}$ einer Solltemperatur $T_A$ des Speichermediums,
Vorgeben oder Berechnen einer Sperrzeit $t_z$,
Vorgeben einer Wartezeit $t_w$,
Vorgeben eines Bivalenz-Temperaturwertes $T_{BV}$, und
Vorgeben einer Temperaturdifferenz $\Delta T_{Pufferspeicher}$,
(B) Berechnen der Solltemperatur $T_A$ und der Solltemperatur $T_B$ des Speichers, wobei nach dem Berechnen die Solltemperatur $T_B$ der Solltemperatur $T_A$ gleichgesetzt wird, wenn $T_B$ größer oder gleich $T_A$ ist, oder unverändert beibehalten wird, wenn $T_B$ kleiner als $T_A$ ist,
(C) Messen der aktuellen Temperatur $T_{sp1}$ des Speichermediums,
(D) wenn $T_{sp1}$ kleiner ist als $T_A$- $T_{max1}$, Beginnen der Wartezeit $t_w$, Veranlassen oder Weiterführen des Übertragens der durch den Haupt-Wärmerzeuger erzeugten Wärmenergie in das Speichermedium und Fortführung des Verfahrens bei Stufe (E) oder, wenn $T_{sp1}$ größer oder gleich

$T_A + T_{max1}$ ist, Beenden des Übertragens von Wärmeenergie in das Speichermedium und Rückkehr zu Stufe (B), sonst bei nicht laufender Übertragung Rückkehr zu Stufe (B), sonst bei laufender Übertragung Fortführen des Verfahrens mit Stufe (E),

(E) Messen der aktuellen Temperatur des Speichermediums $T_{sp2}$ und Abspeichern des Temperaturwertes als $T_{sp2}$ sowie Beginnen der Sperrzeit $t_z$ und Fortführen des Verfahrens bei Stufe (F,) wenn die Wartezeit $t_w$ abgelaufen ist, oder Rückkehr zu Stufe (C), wenn die Wartezeit $t_w$ noch nicht abgelaufen ist,

(F) Messen der aktuellen Temperatur des Speichermediums $T_{aktuell}$, wenn $T_{aktuell}$ größer oder gleich $T_A + T_{max1}$, Beenden des Übertragens von Wärmeenergie in das Speichermedium und Rückkehr zu Stufe (B) oder, wenn $T_{aktuell}$ kleiner als $T_A + T_{max1}$ ist, Fortführen des Verfahrens bei Stufe (G),

(G) Fortführen des Verfahrens bei Stufe (H), wenn die Sperrzeit $t_z$ abgelaufen ist, oder Rückkehr zu Stufe (F), wenn die Sperrzeit $t_z$ noch nicht abgelaufen ist,

(H) Messen der aktuellen Temperatur $T_{sp3}$ des Speichermediums und der aktuellen Außentemperatur $T_{aussen}$, und Berechnen der Größe $\Delta T$ gemäß

$$\Delta T = T_{sp3} - T_{sp2},$$

(I) wenn $\Delta T$ kleiner als $\Delta T_{pufferspeicher}$ und $T_{aussen}$ kleiner als $T_{BV}$ ist, Fortführens des Verfahrens bei Stufe (J) oder Rückkehr zu Stufe (E), wenn $\Delta T$ größer oder gleich $\Delta T_{Pufferspeicher}$ oder $T_{aussen}$ größer oder gleich $T_{BV}$ ist,

(J) Fortführen des Verfahrens bei Stufe (K), wenn die in Stufe (H) gemessene Temperatur $T_{sp3}$ kleiner als $T_B$ ist, oder Rückkehr zu Stufe (E), wenn die in Stufe (H) gemessene Temperatur $T_{sp3}$ größer oder gleich $T_B$ ist,

(K) Ermitteln des Wärmeenergiebedarfs des Gebäudes und Fortführen des Verfahrens bei Stufe (L), wenn für die Erwärmung des Gebäudes ein zusätzlicher Wärmeenergiebedarf besteht, oder Rückkehr zu Stufe (E), wenn der Wärmeenergiebedarf gedeckt ist,

(L) Aktivieren des Zusatz-Wärmeerzeugers zum Erzeugen von zusätzlicher Wärmeenergie für die Erwärmung des Gebäudes.

2. Verfahren nach Anspruch 1, **dadurch gekennzeichnet, dass** in Stufe (F) das Verfahren bei Stufe (L) und nicht bei Stufe (G) fortgeführt wird, wenn nach Ablauf einer vorgegebenen Laufzeit des Verfahrens, wobei die vorgegebene Laufzeit 1 bis 4 Stunden, vorzugsweise 3 Stunden beträgt, während dieser Laufzeit die in Stufe (E) gemessene Temperatur $T_{sp2}$ kein einziges Mal größer oder gleich $T_B$ war.

3. Verfahren nach Anspruch 1 oder Anspruch 2, **dadurch gekennzeichnet, dass** die Berechnung der Solltemperatur $T_A$ in Stufe (B) durch Anwendung einer Heizkurve unter Verwendung der Außentemperatur, vorzugsweise unter zusätzlicher Verwendung wenigstens eines Raumtemperatur-Sollwerts, der für die Regelung der Raumtemperatur wenigstens eines Raums des Gebäudes vorgegeben wird, vorzugsweise unter zusätzlicher Verwendung wenigstens eines gemessenen Raumtemperaturwerts in Bezug auf den für diesen Raum geltenden Raumtemperatur-Sollwertes, durchgeführt wird.

4. Verfahren nach Anspruch 1 bis 3, **dadurch gekennzeichnet, dass** die Außentemperatur $T_{Außen}$ und die gemessenen Raumtemperaturen einer für den jeweiligen Messwert geeigneten zeitlichen Filterung unterworfen werden.

5. Verfahren nach einem der vorangehenden Ansprüche, **dadurch gekennzeichnet, dass** die Berechnung der Solltemperatur $T_B$ in Stufe (B) gemäß der Gleichung

$$T_B = T_A - \Delta T$$

erfolgt, wobei $\Delta T$ ein konstanter Wert ist.

6. Verfahren nach einem der Ansprüche 1 bis 4, **dadurch gekennzeichnet, dass** für die Berechnung der Solltemperatur $T_B$ in Stufe (B) gemäß der Gleichung

$$T_B = T_A - \Delta T$$

im ersten Durchlauf des Verfahrens von einer festen Abweichung $\Delta T$ von 1 bis 6 K, vorzugsweise 4 K, ausgegangen wird, und in den darauffolgenden Durchgängen die Berechnung der Solltemperatur $T_B$ in Stufe (B) gemäß der Gleichung

$$T_B = T_{B\_alt} + \Delta T_{Raum}$$

erfolgt, wobei $T_{B\_alt}$ der Wert für $T_B$ des vorherigen Durchgangs des Verfahrens ist und die durchschnitt-

liche Abweichung $\Delta T_{Raum}$ der Raumtemperatur-Istwerte von den Raumtemperatur-Sollwerten in mindestens einem der Räume des Gebäudes während der zurückliegenden 1 bis 12 Stunden, vorzugsweise 6 Stunden, ermittelt wird.

7. Verfahren nach Anspruch 6, **dadurch gekennzeichnet, dass** für die Berechnung der Solltemperatur $T_B$ in Stufe (B) zusätzlich zur Bestimmung von $\Delta T_{Raum}$ die durchschnittlichen Abweichungen der Raumtemperatur-Istwerte von den Raumtemperatur-Sollwerten abhängig von der Art der Nutzung gewichtet werden.

8. Verfahren nach Anspruch 6 oder 7, **dadurch gekennzeichnet, dass** für die Berechnung der Solltemperatur $T_B$ in Stufe (B) zusätzlich die Differenz der Raumtemperatur-Istwerte zu den Raumtemperatur-Sollwerten der oder die Raumtemperatursollwerte der folgenden 1 bis 6 Stunden, vorzugsweise 2 Stunden, berücksichtigt werden.

9. Verfahren nach einem der Ansprüche 6 bis 8, **dadurch gekennzeichnet, dass** zusätzlich der Sollwert $T_A$ so angepasst wird, dass die Differenz zwischen $T_A$ und $T_B$ stets in einem Bereich zwischen einem Maximalwert $\Delta T_{max}$ und einem Minimalwert $\Delta T_{min}$ liegt.

10. Verfahren nach einem der Ansprüche 6 bis 9, **dadurch gekennzeichnet, dass** $\Delta T_{max}$ 1 bis 6 K, vorzugsweise 4 K, und $\Delta T_{min}$ 0 bis 4 K, vorzugsweise 1 K, beträgt.

11. Verfahren nach einem der Ansprüche 1 bis 10, **dadurch gekennzeichnet, dass** für die Berechnung der Sperrzeit $t_z$ eine lineare Funktion in Abhängigkeit der zeitlich gemittelten Außentemperatur verwendet wird, wobei $t_z$ bei $T_{BV}$ einen vorgegebenen Wert zwischen 5 und 120 Minuten, vorzugsweise 60 Minuten annimmt, mit sinkender Außentemperatur abnimmt und bei einer anlagenabhängigen Grenzaußentemperatur den Wert Null annimmt.

12. Verfahren nach einem der Ansprüche 1 bis 11, **dadurch gekennzeichnet, dass** die Erfassung, Überprüfung und zeitliche Filterung der Temperaturwerte kontinuierlich erfolgt.

13. Verfahren nach einem der Ansprüche 1 bis 12, **dadurch gekennzeichnet, dass** der Wärmeenergiebedarf des Gebäudes anhand der Aktivität des für die Beheizung des Gebäudes zuständigen Heizkreises ermittelt wird.

14. Heizungsanlage für ein Gebäude, wobei die Heizungsanlage dazu eingerichtet ist, ein Verfahren nach einem der Ansprüche 1 bis 13 auszuführen.

Figur 1

Figur 2

Europäisches
Patentamt

European
Patent Office

Office européen
des brevets

# EUROPÄISCHER RECHERCHENBERICHT

**Nummer der Anmeldung**

EP 10 00 4932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2008 027865 A1 (SOLARNEXT AG [DE]) 17. Dezember 2009 (2009-12-17) * Seite 2 - Seite 4 * * Abbildungen 1-4 * ----- | 1,3,5-9, 12-14 | INV. F24D11/02 F24D19/10 |
| A | DE 29 01 820 A1 (BINKERT HUGO) 24. Juli 1980 (1980-07-24) * Seiten 5-7, 9 * * Abbildungen 1, 2 * ----- | 1,4,13 | |
| A | DE 198 56 344 C1 (BUDERUS HEIZTECHNIK GMBH [DE]) 27. September 2001 (2001-09-27) * das ganze Dokument * ----- | 1,12 | |
| A | DE 198 17 414 A1 (SOLAR DIAMANT SYSTEMTECHNIK GM [DE]) 28. Oktober 1999 (1999-10-28) * Zusammenfassung * * Seite 1 * * Abbildungen 1-3 * ----- | 1 | |

**RECHERCHIERTE SACHGEBIETE (IPC)**

F24D

Der vorliegende Recherchenbericht wurde für alle Patentansprüche erstellt

| Recherchenort | Abschlußdatum der Recherche | Prüfer |
|---|---|---|
| München | 10. September 2010 | Schwaiger, Bernd |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 4932

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-09-2010

| Im Recherchenbericht angeführtes Patentdokument | Datum der Veröffentlichung | Mitglied(er) der Patentfamilie | Datum der Veröffentlichung |
|---|---|---|---|
| DE 102008027865 A1 | 17-12-2009 | KEINE | |
| DE 2901820 A1 | 24-07-1980 | KEINE | |
| DE 19856344 C1 | 27-09-2001 | KEINE | |
| DE 19817414 A1 | 28-10-1999 | KEINE | |

EPO FORM P0461

Für nähere Einzelheiten zu diesem Anhang : siehe Amtsblatt des Europäischen Patentamts, Nr.12/82